Europäisches Patentamt

European Patent Office

Office européen des brevets

(19)

(11) Publication number: **0 101 601**
**A1**

(12) **EUROPEAN PATENT APPLICATION**

(21) Application number: **83107985.0**

(22) Date of filing: **11.08.83**

(51) Int. Cl.³: **G 01 N 1/10**

(30) Priority: **12.08.82 US 407638**

(43) Date of publication of application: **29.02.84**
**Bulletin 84/9**

(84) Designated Contracting States: **BE DE FR GB IT**

(71) Applicant: **GENERAL SIGNAL CORPORATION, PO Box 10010 High Ridge Park, Stamford Connecticut 06904 (US)**

(72) Inventor: **Homer, John C., 11189 Butternut Road, Chardon Ohio (US)**
Inventor: **Hazen, Robert K., 18706 Jackson Drive, Chagrin Falls Ohio (US)**

(74) Representative: **Baillie, Iain Cameron et al, c/o Ladas & Parry Isartorplatz 5, D-8000 München 2 (DE)**

(54) **Sampling apparatus.**

(57) A fluid sampling apparatus includes a rotor rotatable in a body, with the body and all parts of the apparatus continuously external of a fluid source to be sampled, such as a radioactive waste circulation pipe. An aspirating plunger may be retracted to suck a measured quantity of fluid through an inlet port into a sampling chamber in the rotor. The rotor is then turned to direct the sampling chamber downwardly and the fluid sample is ejected from an outlet port. The rotor continuously isolates the inlet and outlet ports regardless of rotary position. After one or several cycles of operation, the sample chamber may be flushed with seal water, which is under higher pressure than that of the fluid source. The foregoing abstract is merely a resume of one general application, is not a complete discussion of all principles of operation or applications, and is not to be construed as a limitation on the scope of the claimed subject matter.

SAMPLING APPARATUS

BACKGROUND OF THE INVENTION

Sampling apparatus of various types have been heretofore proposed to obtain a sample of fluid material. A number of prior U.S. Patents have attempted to sample flowing liquid within a pipe or conduit, and in many cases the sampling apparatus was permanently mounted to partially interfere with the flow of the fluid within the pipe. Examples of this first type are shown in U.S. Patents 3,064,481; 3,541,861; 3,751,992; and 4,195,525.

In another sampling apparatus, the structure was one wherein some portion of the sampling apparatus periodically moved into the stream of fluid flow in order to obtain the sample. Such structures are exemplified in U.S. Patents 3,031,890; 3,318,154; 3,555,910; 3,659,461; 3,747,411; 3,949,614; 4,218,920; and 4,262,533. Other structures have been proposed, as in U.S. Patent 4,009,617 and 4,160,382.

Many of these structures are proposed for sampling various chemical substances which may be corrosive, and hence stainless steel or other corrosion-resistant metals are often suggested for use. The dynamic seals used with such movable or reciprocable sampling devices are often subjected to the fluid material, and as a result many of the prior art structures are unsatisfactory where a sampling apparatus is desired for a hostile environment such as a radioactive waste material. Previously, such radioactive waste was relatively low in radioactivity, but more recently a considerably higher level of radioactivity in the waste material has been proposed, in order to concentrate a greater amount of radioactive waste material into a given volume. Nuclear power plants, for example, generate a considerable amount of radioactive waste, which may be collected in a central location, at which time it is removed and suitably containerized for disposal. Such waste material has four undesirable characteristics: it is radioactive, corrosive, contains abrasive particles, and is at an elevated temperature. The sampling apparatuses of the previously mentioned U.S. Patents have been unsuitable for sampling such radioactive waste, which may be flowing in a waste circulation pipe, for example. With this corrosive, abrasive, heated, radioactive fluid material, a sampling device which is permanently or periodically inserted into the fluid flow will become abraded and corroded by the flowing material, which can cause lack of accuracy in the sampling apparatus, or worse, can cause leaks and require excessive maintenance efforts. Leaks are especially dangerous with radioactive material in contaminating unprotected areas. A purpose of a sampling apparatus is to obtain an accurate representative sample of the quantity, and if the corrosive and abrasive material wears away part of the apparatus prior to the sampling, this can destroy the accuracy of the sampling apparatus.

### SUMMARY OF THE INVENTION

The problem to be solved, therefore, is how to construct a sampling apparatus which overcomes the aforementioned problems. This problem is solved by a sampling apparatus for extracting a fixed volume sample of fluid material from a conduit means wherein no portion of said apparatus substantially projects into the conduit means, comprising a rotatable member mounted on the outside of and in fluidtight relationship with the conduit means, said rotatable member having a sample receiving chamber adapted for fluid communication with the fluid material via an aperture in the conduit means when said member is at a first rotational position, aspirating means for drawing a sample of the fluid material into the chamber at said first rotational position of said member, such chamber being substantially filled by said sample, means for rotating said member to another rotational position to isolate said sample containing chamber from said fluid material in the conduit means, and means for effecting removal of the sample from said chamber only after said isolation occurs.

The problem is further solved by a sampling apparatus for connection to a fluid source, comprising in combination a stator connectable externally to the fluid source and having an axis, said stator having first and second peripherally spaced apertures therein spaced apart by a first arc relative to said axis, said first aperture being an inlet aperture to communicate with the fluid in said fluid source, said second aperture being an outlet aperture, a rotor having a circular cross section and rotatably journaled in said stator about said axis, a bore in said rotor, said rotor being rotatable through substantially said first arc between first and second arcuate positions to have said rotor bore selectively in communication with said first and second stator apertures, respectively, plunger means receivable in said rotor bore, and in said first arcuate position said plunger means being extendable and retractable in said rotor bore to draw a fluid sample from said fluid source, and in said second arcuate position said rotor sealing closed said inlet first aperture to said fluid source, and said fluid sample being removable from said rotor bore at said outlet aperture.

Accordingly, an object of the invention is to provide a sampling apparatus wherein no part of the apparatus extends into the flowing stream of fluid.

Another object of the invention is to provide a waste sampling system wherein the sample is volumetrically accurate and representative of a defined total waste volume.

A further object of the invention is to provide a waste sampling system wherein no cross connection can exist between the waste stream and a sample exhaust port.

A still further object of the invention is to provide a sampling system wherein the apparatus is capable of easy decontamination.

Another object of the invention is to provide a sampling system wherein the apparatus does not interrupt the fluid stream flow.

A further object of the invention is to provide a sampling apparatus to eliminate elastomeric seals at the inlet port to the apparatus from the fluid stream pipe.

A still further object of the invention is to provide a radioactive waste fluid sampling apparatus wherein any leakage is not of radioactive material, or else such leakage is back into the waste stream pipe.

Other objects and a fuller understanding of the invention may be had by referring to the following description and claims, taken in conjunction with the accompanying drawing.

### BRIEF DESCRIPTION OF THE DRAWING

Fig. 1 is a vertical, sectional view through a sampling apparatus constructed in accordance with the invention;

Fig. 2 is a vertical, sectional view, with the apparatus in a sample-eject position;

Fig. 3 is a longitudinal, sectional view through the apparatus of Fig. 1, on line 3-3 of Fig. 1;

Fig. 4 is a view similar to Fig. 2, but with the apparatus in an intermediate position;

Fig. 5 is a view similar to Fig. 4, with the apparatus in still another intermediate position; and

Fig. 6 is a vertical, sectional view of a modification.

### DESCRIPTION OF THE PREFERRED EMBODIMENTS

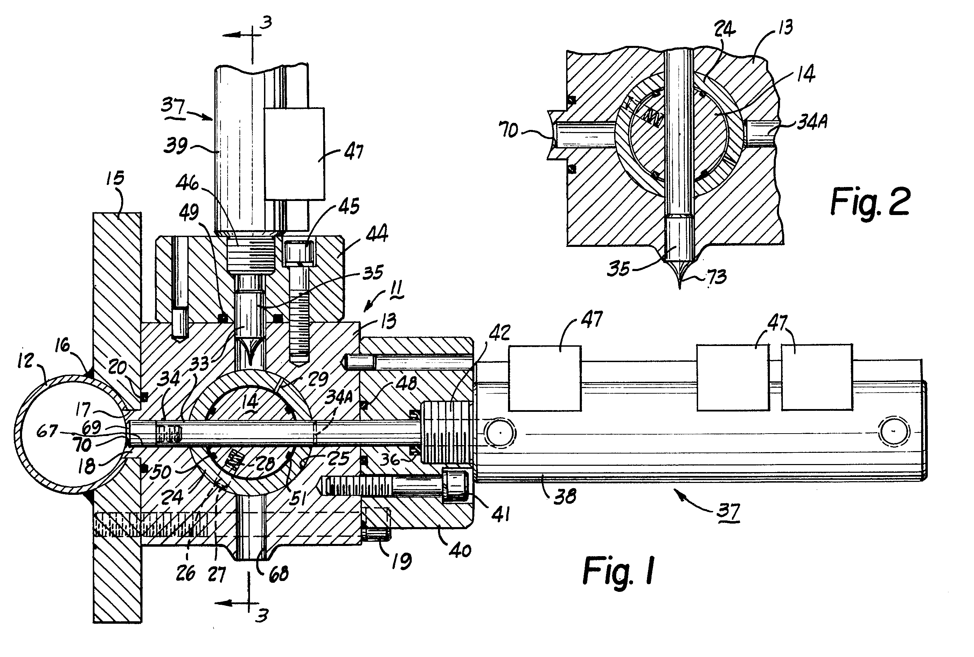

Figs. 1-5 illustrate a sampling apparatus 11 which may be connected to a fluid source 12. This may be a tank or other container, but is shown as a pipe in which fluid material may flow, for example, as from a circulating pump in a radioactive waste system. In such a circulating flow pipe 12, the pressure may be relatively low, e.g., only a few psi, or may be 100 psi as an example.

The sampling apparatus includes generally a metal body 13 and a metal rotatable member 14, or a rotor. The body 13 is connectable to the fluid source 12. In this embodiment, the body 13 is attached to the pipe 12 by means of a plate 15 welded at 16 to the pipe 12, with an aperture 17 extending into the sidewall of the pipe 12. The body 13 has a nipple 18 closely fitting in the aperture 17, and the body may be secured in a suitable manner, such as by the bolts 19, to the plate 15, with an O-ring 20 providing a static seal to prevent leakage.

The body 13 and rotor 14 are made from metal which is as impervious as practicable to the hot, corrosive, abrasive, radioactive fluid material. Various grades of stainless steel may be used for the body 13 and rotor 14. A longitudinally split metal sleeve 24 is interposed between the body 13 and rotor 14, and disposed in a bore 25 with a circular cross section in the body 13. The split metal sleeve 24 may be secured to either the body 13 or rotor 14, and in this particular embodiment it is pinned by a pin 26 to the rotor 14 to be a part of that rotor. The pin may have a conical outer end to fit in a conical recess 27 in the sleeve 24 and be urged outwardly by a spring 28 in the rotor 14. This permits disassembly of the sleeve 24 from the rotor 14 by depressing the outer end of the pin 26. The pin 26 is preferably diametrically opposite the slot 29 in this sleeve 24.

The rotor 14 has a bore 32 which establishes a sample chamber within the rotor 14. In this preferred embodiment, the bore 32 extends diametrically through the rotor 14, as well as through the sleeve 24. Plunger means 33 is provided to extend into the bore 32, and in this embodiment the plunger means includes an aspirating plunger 34 and an ejection plunger 35. Actuator means 37 are provided for the plunger means 33, and in this embodiment the actuator means includes reciprocable fluid motors 38 and 39 to actuate the plungers 34 and 35, respectively. A mounting block 40 is secured by bolts 41 to the body 13, and the fluid motor or cylinder 38 has a threaded connection at 42 into the mounting block 40. A seal 36, such as a lip seal, is provided in the mounting block 40 surrounding the plunger 34 to inhibit leakage from that area. One may be provided for the plunger 35, but preferably this plunger fits quite tightly, almost a press-fit, to assure that the sample chamber 32 is wiped clean of the fluid sample, as discussed below. It is not essential that the aspirating plunger 34 have a tight fit because it will perform its aspirating function of drawing a sample of liquid into the sample chamber 32 even though it does not have a tight fit, and hence the seal 36 is provided.

Similarly, a mounting block 44 is secured by bolts 45 to the body 13 and provides support for the reciprocable fluid motor 39 at the threaded connection 46. The plungers 34 and 35 are directly actuated by the fluid motors 38 and 39, respectively, and the movements may be controlled by limit switches 47. Static seals, such as O-rings 48 and 49, prevent fluid leakage at the mounting faces of the mounting blocks 40 and 44, respectively.

The split sleeve 24 has a loose fit on the rotor 14 and has a static fluid seal thereto by O-rings 50 and 51, which surround the bore 32. The split metal sleeve 24 has a metal-to-metal seal with the body 13, due to the inherent outward resilient bias of sleeve 24, as established at an annular land 52 on the sleeve 24 and an annular land 53 on the body 13. Connections 55 and 56 on the body 13 are means for connection to a fluid pressure source. This pressure fluid may be in the order of 100 to 150 psi, and serves the dual function of providing both a seal fluid and a flushing fluid. This may be demineralized water, as an example. This seal water at the threaded connection 56 enters through a radial passageway to an annular chamber 57 surrounding the rotor shaft 58. The pressure fluid, such as seal water, may then pass through a ball bearing 59 which journals the shaft 58 to another annular chamber 60, which bathes both the outer and the inner surface of the split sleeve 24. In a similar manner, pressure fluid entering the threaded connection 55 passes through a ball bearing 61 to be received in an annular chamber 62 at the other end of the sleeve 24. This establishes pressurized fluid within the slot 29, which is used for cleaning or flushing, as described below. A rotary actuator 65 is connected to rotate the rotor shaft 58, in this case through an angle of at least 90 degrees.

The body 13 has an inlet port 67 and an outlet port 68 disposed at nine o'clock and six o'clock, respectively, as shown in Fig. 1. The inlet port 67 is from the fluid source, namely, the pipe 12, and this inlet port 67 also includes valve means shown as a poppet valve 69 unitary with the forward end of the aspirating plunger 34, which cooperates with a conical valve seat 70 in the body 13. The outlet port 68 is preferably mounted vertically downwardly, so that a fluid sample may be ejected into a container 72.

## OPERATION

The sampling apparatus 11 is designed to sample a fixed volume of fluid material in the bore 32 or sample chamber. For example, the volume of the sample chamber might be 5 or 10 cc. If one wants a larger quantity (e.g. 60 cc) sampled into the container 72, the sampling apparatus is merely repetitively actuated 12 or 6 times to form such a representative sample.

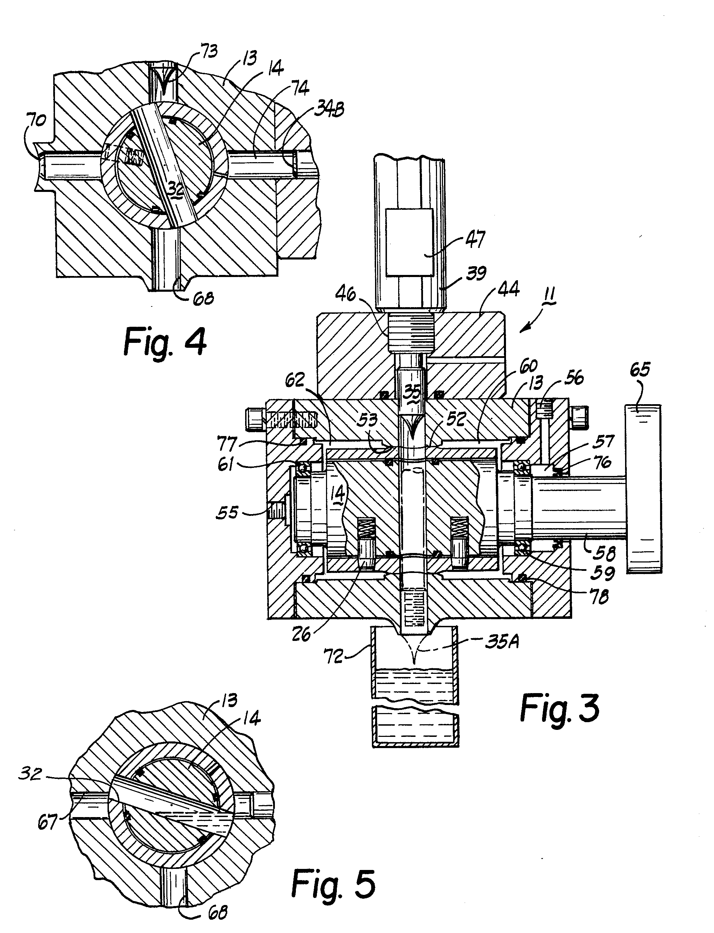

Fig. 1 illustrates the sampling apparatus in the preferred quiescent position, with the plunger 34 extended by the fluid motor 38 so that it is extended completely through the bore 32, and with the poppet valve 69-70 closed. In this condition, it will be noted that there is nothing which extends into the fluid source or waste circulation pipe 12 to impede the flow thereof or to be corroded or abraded away by any abrasive particles within the fluid in the pipe 12. When a sample is desired to be taken, e.g., once a week, the aspirating plunger 34 is retracted to the phantom position 34A, wherein the forward end of the plunger lies just clear of the rotor 14-24. The rotary actuator 65 may then be actuated for a 90-degree rotation clockwise of the sample chamber 32 to the position shown in Figs. 2 and 3. From Fig. 2, it will be noted that there is now, and always has been, complete isolation between the inlet port 67 and the outlet port 68 because the metal-to-metal seal at the lands 52 and 53 between the split sleeve 24 and the body 13 establishes this fluidtight seal. The closing of the inlet port 67 is obtained with only about the first 30 degrees of clockwise rotation of this rotor 14-24.

The fluid motor 39 is then reciprocated to move the ejection plunger 35 downwardly from the full-line position shown in Fig. 1 to the position shown in Fig. 2, and to the phantom position 35A shown in Fig. 3. The pointed tip 73 on the ejection plunger 35 assures that all of the liquid will not only be forced out of the sample chamber 32, but will not cling to the plunger 35, instead dripping off the pointed tip 73 into the container 72. Next, the ejection plunger 35 is withdrawn to the position shown in Fig. 1, the rotary actuator rotated counterclockwise as shown in Fig. 1, and the plunger 34 being extended to the position shown in Fig. 1. This completes the cycle to dispense one predetermined quantity of the fluid sample. This cycle may be repeated as many times as desired to fill the container 72 to the desired total quantity.

After the last measured quantity has been dispensed, the sampling apparatus 11 may be cleaned. With the ejection plunger 35 in the downward position shown in Fig. 2, it next may be withdrawn upwardly to the position shown in Fig. 1.

Next, the rotary actuator 65 may rotate the rotor 14-24 counterclockwise about 20 degrees, to the position shown in Fig. 4. At this point, the aspirating plunger 34 may be withdrawn an additional amount to the position 34B, shown in Fig. 4. Because the slot 29 is pressurized with the pressure fluid (in this case a cleaning fluid such as demineralized water), the flushing chamber 74 will fill with this cleaning fluid. Next, the rotary actuator 65 may continue the counterclockwise rotation of the rotor 14-24 to the position as shown in Fig. 5, whereat the bore 32 will be in a position to communicate the chamber 74 with the inlet port 67. Preferably, the cleaning fluid is at a higher pressure than the pressure within the pipe 12, and hence the liquid or cleaning fluid may then flow into the bore or sample chamber 32 by the forward movement of the aspirating plunger 34, or by gravity. When the rotor 14-24 is in the horizontal posi-

tion shown in Fig. 1, then the aspirating plunger 34 may be advanced completely to the position of Fig. 1, whereat the cleaning fluid will flush this sample chamber 32 and push the cleaning fluid into the pipe 12 as the poppet valve 69 closes.

It will be noted that the pressure fluid at the threaded connections 55 and 60 provides not only the cleaning function for the sample apparatus 11, but also a sealing function. It may be considered seal water because it is at a higher pressure than the pressure in the fluid pipe 12. This seal water in the annular chambers 57, 60, and 62 acts against a lip seal 76 and O-ring seals 77 and 78 to assure that leakage of any fluid out of the sampling apparatus 11 is either a leakage of the demineralized seal water or leakage backwards through the inlet port 67 into the fluid source pipe 12, so that there is an absolute minimum of contaminated liquid allowed to leak outside the sampling apparatus 11.

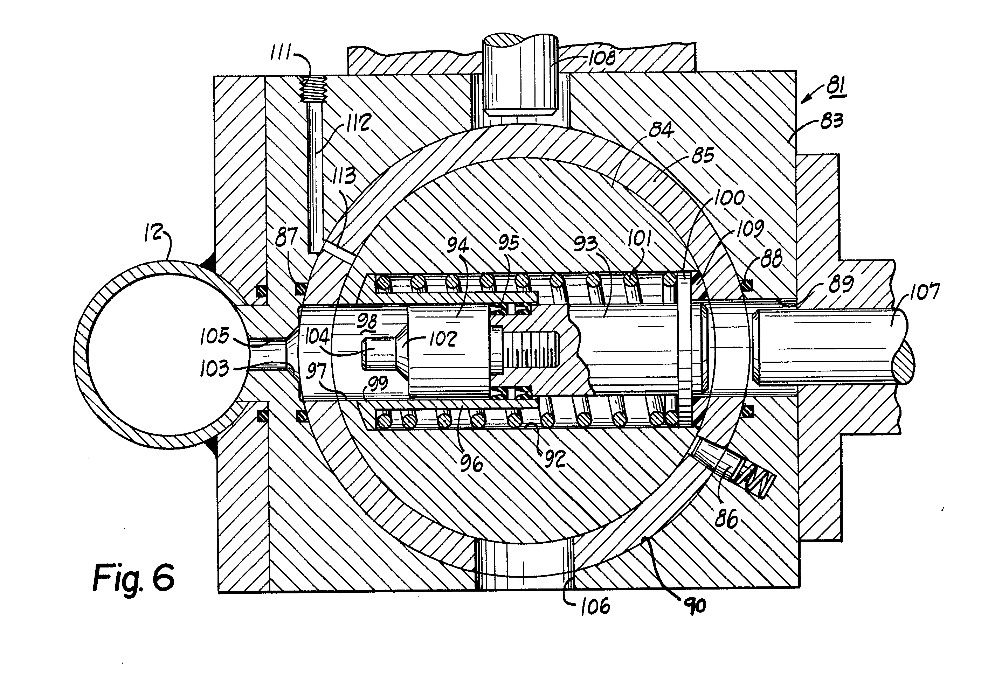

Fig. 6 illustrates a modification of the invention and shows a sampling apparatus 81 operable from a fluid source such as a radioactive waste circulation pipe 12. Again, the apparatus 81 has a metal body 83 and a metal rotatable member or rotor 84. A split metal sleeve 85 is interposed between the rotor 84 and body 83, and is secured to one or the other. In this embodiment, the split sleeve 85 is secured by a spring-urged pin 86 to the body 83, so that it forms a part of the body 83. O-rings 87 and 88 surround a transverse bore 89 in the body 83 and seal the outer side of the sleeve 85 to a bore 90 in the body 83. A metal-to-metal seal is provided between the rotor 84 and the split sleeve 85, due to the inherent inward biasing resiliency of this split sleeve 85. This is provided on an annular land (not shown) between rotor 84 and split sleeve 85 in a manner similar to the annular land 52 shown in Fig. 3.

The rotor 84 has a bore 92 in which plunger means 93 is located. This plunger means is a composite plunger having a threaded nosepiece 94 which is removable so that lip seals 95 may be provided in the plunger 93 to cooperate with a sleeve 96 disposed in the bore 92. This bore 92 is actually a counterbore relative to a bore 97 at the nine o'clock position, in Fig. 6, of this rotor 84. The diameter of the bore 97 matches that of the bore 89 in the body 83 to establish, together with the sleeve 96 and the nosepiece 94, a sample chamber 98 within the bore 99 of the sleeve 96. The plunger means 93 has a flange 100 and a compression spring 101 acts between this flange and the flanged forward end of the sleeve 96, thus urging apart the sleeve 96 and the plunger means 93. An elastomeric seal 109, preferably of ultra-high (density) molecular weight polyethylene, is positioned between the flange 100 and the split sleeve 85. A poppet valve 102 is carried on the forward end of the nosepiece 94 for cooperation with a valve seat 103 in the body 83 adjacent the pipe 12. A cylindrical extension 104 is provided coaxially on the forward end of the nosepiece 94 to substantially fill an inlet opening 105 from the pipe 12 into the sample chamber 98. The body 83 also has an outlet opening 106 to a suitable container, such as container 72 shown in Fig. 3. The rotor 84 may be rotated by a rotary actuator such as actuator 65 shown in Fig. 3. Also, a plunger 107 is provided to act on the rear of the plunger means 93, and the plunger 107 is actuated in turn by a fluid motor such as fluid motor 38 shown in Fig. 1. A plunger 108 is mounted in the twelve o'clock position of Fig. 6, and is actuatable by a fluid motor such as motor 39 of Fig. 1 to move downwardly against the rear of the plunger means 93 when the rotor 84 has been rotated counterclockwise 90 degrees from the position shown in Fig. 6.

The body 83 also has a threaded connection 111 for connection to a fluid pressure source, e.g., demineralized water for seal water and flushing water. This threaded connection leads, by way of a passage 112, to the slot 113 in the split sleeve 85.

In operation, the structure of the sampling apparatus 81 of Fig. 6 is similar to that of the embodiment shown in Figs. 1-5. The quiescent state may be with the rotor rotated 90 degrees counterclockwise from the position shown in Fig. 6; however, it is preferred that the quiescent state be with the poppet valve 102 closed on the valve seat 103, which is accomplished with the plunger 107 advanced so as to advance the plunger means 93 and compress the spring 101.

The sampling apparatus 81 may be used to obtain a fixed volumetric sample of the fluid within the pipe 12. To accomplish this, the plunger means 93 acts as an aspirating plunger to be withdrawn toward the right to the solid-line position shown in Fig. 6. This, by suction and aided by any pressure within the pipe 12, fills the sample chamber 98 with the fluid to be sampled. The rotor 84 is then rotated counterclockwise 90 degrees and the plunger 108 is advanced to act on the plunger means 93 to expel the sample into the receiving container at the outlet opening 106. The plunger 108 is retracted, permitting the spring 101 to move the plunger 93 upwardly. The rotor 84 is then rotated clockwise 90 degrees and the plunger 107 is advanced to move the plunger means 93 in an advancing movement to close the poppet valve 102. The fixed volumetric sample might be 5 cc or 10 cc, for example, and if a larger quantity is desired in the container at the outlet, this cycle may be repeated.

At the end of the cycle or cycles of operation, a flushing or cleaning operation may be effected. The rotor 84 may be rotated clockwise about 20 degrees from the position shown in Fig. 6 until the sample chamber 98 communicates with both the inlet port 105 and the slot 113 in the split sleeve 85. At this position, the pressurized fluid, such as seal water (which is at a higher pressure than the fluid in pipe 12) will enter the sample chamber 98 from this slot 113. This will flush the fluid material formerly in pipe 12 out of the sample chamber 98 to a desired extent, depending upon the length of time that the rotor 84 is left in this position. When the rotor is returned to the position shown in Fig. 5, then plunger 107 may be advanced to advance plunger 93 and close the poppet valve 102. The fact that this poppet valve has a smaller area than the bore 99 contributes to a fast flushing action across the conical surface of the valve seat 103 and the poppet valve 102 to rapidly flush from these surfaces any solid particles in the fluid material. Again, the seal water performs the same sealing function of a higher pressure seal water within the sampling apparatus 81 than the pressure in the pipe 12, so that if there is any leakage of liquid from the sampling apparatus 81, it is either of the seal water or a liquid leakage back into the pipe 12. This again provides a minimum of leakage of the fluid material in pipe 12 out to the exterior of the sampling apparatus 81.

It will be noted in each of the two embodiments that a plate can be welded to the exterior of the fluid source, such as pipe 12, and then the sampling apparatus 11 or 81 may be bolted to this plate. In each of the two embodiments, the rotor may be rotated so that the bore 32 or 92 is vertical, in which case, the sampling apparatus acts as a valve to close off communication between the fluid supply pipe 12 and the outlet opening 68 or 106. In this position, many parts of the sampling apparatus 11 or 81 may be removed or repaired without leakage of any fluid which may be radioactive. Also, the sampling device 11 is positioned between the pipe 12 and an operator who places and removes the sample container 72, thus acting as a radiation shield between the operator and the radioactive fluid in the pipe 12.

The present disclosure includes those contained in the appended claims, as well as those of the foregoing description. Although this invention has been described in its preferred forms with a certain degree of particularity, it is understood that the present disclosure of the preferred forms has been made only by way of example and that numerous changes in the details of construction and the combination and arrangement of parts may be resorted to without departing from the spirit and the scope of the invention as hereinafter claimed.

C L A I M S

1.      A sampling apparatus for extracting a fixed volume sample of fluid material from a conduit means wherein no portion of said apparatus substantially projects into the conduit means, comprising:

a rotatable member mounted on the outside of and in fluidtight relationship with the conduit means, said rotatable member having a sample receiving chamber adapted for fluid communication with the fluid material via an aperture in the conduit means when said member is at a first rotational position;

aspirating means for drawing a sample of the fluid material into the chamber at said first rotational position of said member, such chamber being substantially filled by said sample;

means for rotating said member to another rotational position to isolate said sample containing chamber from said fluid material in the conduit means;

and means for effecting removal of the sample from said chamber only after said isolation occurs.

2.      A sampling apparatus as set forth in claim 1, wherein said aspirating means and said removal means include plunger means and motive means.

3.      A sampling apparatus as set forth in claim 1, wherein said aspirating means includes a reciprocable plunger.

4.      A sampling apparatus as set forth in claim 1, including valve means actuable by said aspirating means.

5.      A sampling apparatus as set forth in claim 4, wherein said valve means is a poppet valve adjacent the conduit means and is connected to said aspirating means for direct actuation.

6.      A sampling apparatus as set forth in claim 1, wherein said removal means includes a reciprocable plunger.

7.      A sampling apparatus as set forth in claim 6, wherein said removal means plunger acts downwardly and has a pointed tip to minimize clinging of the fluid sample on said plunger.

CASE ST-91

8.      A sampling apparatus as set forth in claim 1, including means to pressurize said apparatus with a cleaning fluid at a pressure exceeding that of the fluid material in the conduit means to assure that any leakage of fluid from said apparatus is either into the conduit means or is leakage of said cleaning fluid.

9.      A sampling apparatus as set forth in claim 1, including flushing means to clean said apparatus, said flushing means including means to connect said apparatus to a source of pressurized cleaning fluid.

10.     A sampling apparatus as set forth in claim 9, wherein said aspirating means may be moved to fill a flushing chamber with said cleaning fluid,

        and said aspirating means may be moved in the opposite direction to flush the cleaning fluid in said flushing chamber through said sample chamber.

11.     A sampling apparatus as set forth in claim 1, wherein said aspirating means includes a plunger also forming part of said removal means.

Fig. 2

Fig. 1

**Fig. 4**

**Fig. 3**

**Fig. 5**

Fig. 6

European Patent Office

EUROPEAN SEARCH REPORT

0101601
Application number

EP 83 10 7985

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-3 475 950 (C.R. FERRIN) * Claim 1; figures 1-3 * | 1 | G 01 N 1/10 |
| A | DE-A-2 001 311 (HEWLETT-PACKARD CO.) * Figure 10 * | 1 | |
| A | US-A-3 080 759 (J.W. McQUAID) | | |

TECHNICAL FIELDS SEARCHED (Int. Cl. 3)

G 01 N 1/10

The present search report has been drawn up for all claims

| Place of search BERLIN | Date of completion of the search 07-11-1983 | Examiner SCHWARTZ K |
|---|---|---|